# EUROPEAN PATENT APPLICATION

(11) **EP 2 448 226 A1**
(43) Date of publication of application: **02.05.2012**
(21) Application number: 10805997.3
(22) Date of filing: 23.06.2010
(51) Int. Cl.: H04M 1/725, G06F 17/30

(54) **MOBILE PHONE MESSAGES PROCESSING METHOD AND MOBILE PHONE**

(30) Priority: 05.08.2009 CN 200910166051
(71) Applicant: ZTE Corporation, Shenzhen, Guangdong 518057 (CN)
(72) Inventor: HUANG, Qinbo, Shenzhen Guangdong 518057 (CN)
(74) Representative: Klemm, Rolf
(86) International application number: PCT/CN2010/074301
(87) International publication number: WO 2011/015093

(57) **Abstract**

A method for processing a mobile phone message and a corresponding mobile phone are provided in the present invention, and the method for processing the mobile phone messages includes: extracting values of public fields of mobile phone messages (S11); and storing said values of public fields of the mobile phone messages into the same data base (S12), wherein said data base is established with public fields of at least two kinds of mobile phone messages in advance. The technical scheme of the present invention integrates all the messaging service modules in the application layer of the mobile phone, and uniformly stores values of public fields of various mobile phone messages into the same database, which is greatly convenient for users uniformly managing all kinds of different messages.

## Description

### Technical Field

The present invention relates to the mobile communication field, and specifically, to a method for processing a mobile phone message and a mobile phone.

### Background of the Related Art

In recent ten years, when the wireless communication technology develops in a high speed, the design technology of the mobile phone as the wireless communication terminal also develops rapidly, the communication functions of the mobile phone become more and more and also become stronger and stronger. From the original simple voice communication, to the short messaging service and the multimedia messaging service, and to Email and the instant message (IM) and so on, the performance of the design of the communication function service module determines whether the user's operation and use are convenient, thereby determining whether it will get more the user's favor.

These services modules related to communication have a feature in common that the content of the services is messages, which should be stored in different mailboxes according to different user requirements, for example, the new coming messages are stored in "inbox", the messages sent successfully are stored in "sent box", the messages sent unsuccessfully are stored in "sending box", and the edited messages may be stored in "draft box"; these different mailboxes may also be backed up to an encrypted safe mailbox, and the user may even define respective mailbox according to respective requirements and modify the name of the self-defined mailbox as needed.

In the related art, each type of messages (such as the short message, the multimedia message, Email, and IM and so on) is individually stored in the application layer of the mobile phone as a separate message module, which is not convenient for the user to uniformly manage various types of message. For example, since the mobile phone acts as a means for communication, the user usually hopes to see the message records specific to someone, however, the history contact records specific to someone can be found only when going into different messaging service modules and then going into different groups of each messaging service module according to the existing design. Additionally, even if it is to see the same type of messages, the message records specific to someone should also be seen by going into different mailboxes, and because the messages are classified into different groups, the time order of the messages for communication between user and contact is also not visualized.

### Summary of the Invention

The technical problem to be solved in the present invention solves is to provide a method for processing a mobile phone message, which enables the user to uniformly manage the various types of mobile phone messages.

In order to solve the above-mentioned technical problem, on one hand, a method for processing a mobile phone message is provided, and the method comprises:
extracting values of public fields of the mobile phone messages; and
storing the values of the public fields of the mobile phone messages to a same data base, wherein the data base is established with the public fields of at least two types of mobile phone messages in advance.

On the other hand, a mobile phone is provided, and the phone comprises:
an extracting module, which is configured to: extract values of public fields of mobile phone messages; and
a storing module, which is configured to: store the extracted values of the public fields of the mobile phone messages to a same data base; wherein the data base is established with the public fields of at least two types of mobile phone messages.

It can thus be seen that the method for processing the mobile phone message and the corresponding mobile phone provided by the present invention integrate all of the messaging service modules in the application layer of the mobile phone, and uniformly store the values of the public fields of various types of mobile phone messages to the same data base, which is greatly convenient for uniformly managing various types of different messages by users.

### Brief Description of Drawings

FIG. 1 is a flowchart of the method for processing a mobile phone message according to an embodiment of the present invention;
FIG. 2 is a flowchart of the method for processing a mobile phone message according to another embodiment of the present invention;
FIG. 3 is a flowchart of an application example of the method for processing a mobile phone message according to the present invention;
FIG. 4 is a flowchart for moving processing of mobile phone messages in batch according to the present invention;
FIG. 5 is a schematic diagram of the mobile phone according to the embodiment of the present invention.

### Preferred Embodiments of the Present Invention

Various mobile phone message, such as a short message, a multimedia message, Email, and an IM and so on, have a plurality of public fields including a message identifier (ID), a recipient, a sender, a message time, a subject, a mailbox ID, a message type ID and an identifier of the storage medium, and so on. The method for processing a mobile message provided by the present invention is mainly to uniformly store the value of the public fields of various types of mobile phone messages in the same data base, which is convenient for the user to uniformly manage the various types of mobile phone messages on the basis of the data base storage.

The technical scheme of the present invention will be described in detail in combination with drawings and embodiments.

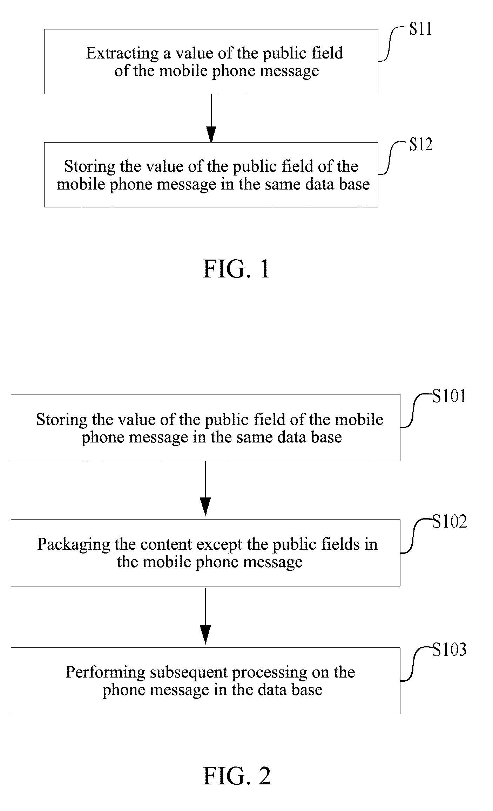

FIG. 1 is a flowchart of the method for processing mobile phone messages according to an embodiment of the present invention. As shown in FIG. 1, the method for processing mobile phone messages according to the embodiment of the present invention comprises following steps.

Step S11, the values of the public fields of the mobile phone messages are extracted.

Step S12, the values of the public fields of the mobile phone messages are stored in the same data base.
wherein a data base is created in advance with the public fields of at least two types of mobile phone messages, for example, the data base is created with the public fields (such as the messaging ID, recipient, sender, messaging time, subject, mailbox ID and message type ID) of the short message, multimedia message and Email.

The method for processing mobile phone messages according to the embodiment of the present invention uniformly stores the values of the public fields of various types of mobile phone messages in the same data base, which is greatly convenient for the user to uniformly manage and use various types of mobile phone messages, is more intuitive, and meets the requirement of the user better.

FIG. 2 is a flowchart of the method for processing mobile phone messages according to another embodiment of the present invention. As shown in FIG. 2, the method for processing the mobile phone message according to the embodiment of the present invention comprises following steps.

Step S101, the values of the public fields of mobile phone messages are extracted, and are stored in the same data base established in advance.

When the mobile phone is powered up, the value of the public field of the mobile phone message in subscriber identity module (SIM) card may be stored in this data base synchronously, so as to be convenient for unified management; the values of public fields of the newly received mobile phone messages such as the short message, the multimedia message, the push message and Email, etc., may be stored in the data base as a record; the values of the public fields of mobile phone messages, such as the short messages and multimedia messages, and so on, that is newly established by the user and is stored as drafts may be extracted to be stored in the data base.

Step S102, the content except the public fields in the mobile phone message is packaged so as to make the packaged message to be one-to-one correspondence with the corresponding record of the mobile phone message in the data base;

Some mobile phone messages further include other contents except above public fields, such as pictures in the multimedia message, attachments of Email, etc., and these contents should be packaged into message files according to the messaging service protocol (such as multimedia messaging service (MMS) protocol and Email protocol and so on) to be stored into the file system, wherein the packaged message files is one-to-one correspondence with the record of the phone message stored in the data base, for example the corresponding message files may be named by the message ID of the mobile phone message in the data base, which is convenient for obtaining the correlated message files.

Step S103, subsequent processing is performed on the mobile phone message in the data base;
wherein the subsequent processing includes processing such as uniformly selecting, querying and deleting in batch, copying in batch and moving in batch for the mobile phone messages in the data base.

The method for processing mobile phone messages according to the embodiment of the present invention uniformly stores the values of public fields of various mobile phone messages in the same data base, and further, for the more complex mobile phone messages such as the multimedia messages and Email and so on, the content except public fields in the mobile phone messages may further be packaged and stored as message files, and therefore the users may obtain the entire content of this type of mobile phone messages.

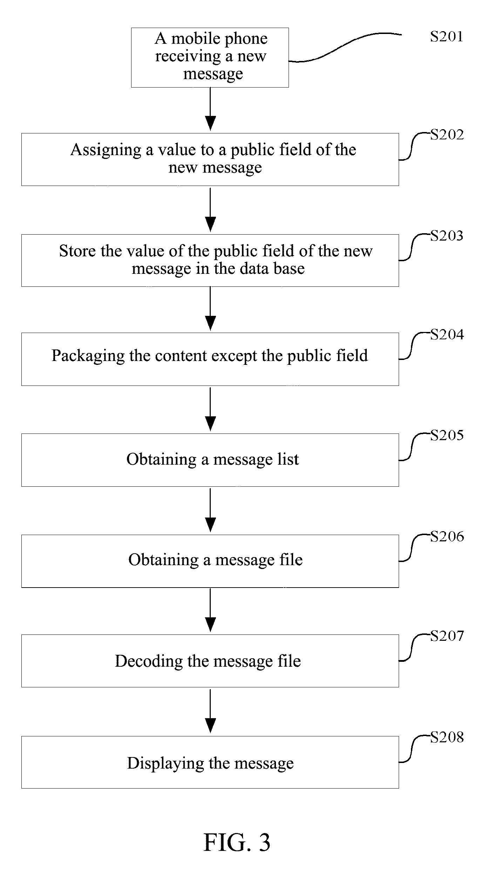

Below the method for processing mobile phone messages according to the embodiment of the present invention is described in detail by taking a new message coming as an example. FIG. 3 is a flowchart of the application example of the method for processing mobile phone messages according to the present invention, and the method comprises following steps.

Step S201, the mobile phone receives a new message.

Step S202, a value is assigned to the public field of the new message.

For example, the new message is generally put into the inbox, so a corresponding value of the inbox is assigned to the mailbox ID of the new message; if the new message is the multimedia message, the message type ID of this new message needs to be assigned as a corresponding message type ID; additionally, values are also assigned to the receiving time of the new message and the subject of the message etc..

The usually distinguished message mailboxes such as the inbox, sending box, sent box, draft box, and message favorites and the like may act as preset mailboxes. Because the data base records have functions of sequencing, combining, filtering and querying, the required message list may be obtained by different data base structured query languages (SQL), which is convenient for the user freely defining various mailboxes and setting the filtering rule of the mailbox so as to uniformly manage the message in different ways.

Step S 203, the value of the public field of the new message is stored in the data base.

A uniform message ID may be generated in the process of storing the value of the public field of the new message in the data base established in advance.

Step S204, if the new message, such as the multimedia message and Email and so on, includes the content except the public field, the content except the public field in the message is packaged as a message file according to the corresponding message protocol and is stored in the file system, for example, the message file may be named based on the message ID to make the message file to be one-to-one correspondence with the corresponding message record stored in the data base.

For the message that the public fields in the data base are able to store all the content of the message, such as the short message, it does not need to execute step S204.

Steps S201∼ S204 mainly describes the method for storing the received new message, and the following steps take reading the message in the data base as an example to illustrate the method for subsequently processing the mobile phone message record in the data base.

Step S205, the user inputs a query condition to query the message list meeting the query condition by the SQL language in the data base.

Reading a message for example is to query this message and the corresponding file thereof from the data base based on the message ID; entering a mailbox for example is to execute to query all of the messages corresponding to the mailbox ID, and then further refresh the corresponding message list.

Step S206, when the user selects a complex message (such as the multimedia message) in the message list to read, the mobile phone obtains the corresponding message file from the data base based on the message ID of the selected message.

The simple message (such as a short message) may be read from the data base directly.

Step S207, the corresponding message protocol is found according to the message type of the message to decode the message file.

For example, if this message is a multimedia message, the MMS protocol is found to decode the corresponding message file.

Step S208, the decoded message file is displayed for reading.

Steps S205∼S208 only take reading the message in the data base as an example to illustrate the subsequently processing of the mobile phone message in the data base according to the present invention, and those skilled in the art could understand that other usual operations such as selecting and querying and the like could also be performed on the mobile phone message, and certainly, the operations such as deleting in batch, copying in batch and moving in batch etc. could also be performed on the mobile phone message in the data base could according to the present invention.

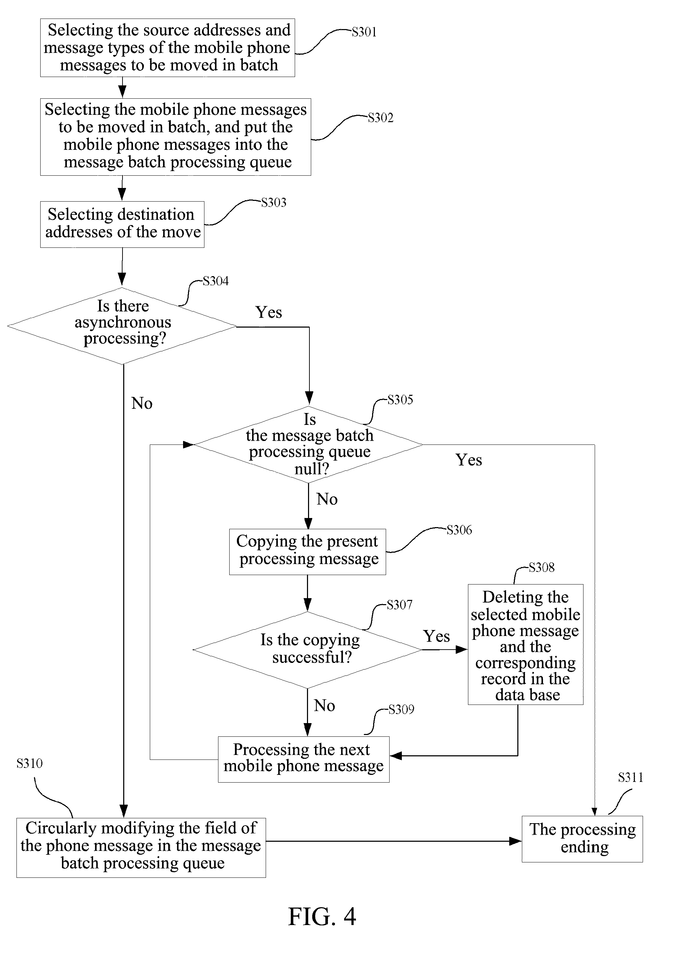

Below moving the mobile phone message in batch is taken as an example to further illustrate the subsequent processing for the mobile phone message in the data base according to the present invention. FIG. 4 is a flowchart for moving processing in batch for the mobile phone message according to the present invention.

Step S301, the user selects the source addresses of mobile phone messages to be moved in batch, and selects the type of the messages to be moved in batch.

For example, mobile phone messages, e.g., the mobile phone short message, mobile phone multimedia message, and mobile phone push message, of this type may be easily selected from the data base, or a message stored in the SIM card can be selected, and so on. Herein it illustrates an example of selecting a short message in a SIM card 1 to move to another SIM card 2 in a dual mode mobile phone. The user selects a short message in SIM card 1, which relates to the asynchronous processing. The asynchronous processing is the operation processing in different storage mediums, and the processing of the next step should not be executed until the related operation is finished. For example reading a short message in a SIM card, this message could not be read until the SIM related interface should be invoked to change the state of the message from an unread state to a read state.

Step S302, the user makes multiple selection for the short messages in the SIM card 1, that is to say, selects multiple short messages to be processed in batch, and the mobile phone puts the selected mobile phone messages into the message batch processing queue after selecting and confirming.

The multiple selection means that the user selects the processing in batch (copying, moving or deleting) in the message list interface of a certain mailbox, then a multiple selection interface appears in the message list interface, and the user may select multiple items of the messages to be processed in this message list or select all, and then can operate the selected message.

Step S303, the user selects the moving destination address such as SIM card 2.

Step S304, it is judged whether there is an asynchronous processing condition according to the information of the message batch processing queue, and if there is not an asynchronous processing condition, e.g., moving the short messages in the local inbox to the message favorites box, step S310 is executed; or else, step S305 is executed.

Judging whether there is an asynchronous processing condition according to the information of the message batch processing queue needs to judge whether the message type of this message is a SIM card message, or whether the destination message ID of the operation is a SIM card message, for example, if it is to delete the SIM card message, the message ID is the SIM card message, and thus the processing is asynchronous processing; or, even if this message is not a SIM card message however needs to be copied or moved to be a SIM card message, the SIM card also needs related processing, which is also asynchronous processing.

Step S305, it is judged whether the message batch processing queue is null,
if the message batch processing queue is null, it is indicated that the message to be processed is not selected or the message batch processing queue has been processed completely, and step S311 is executed; if the message batch processing queue is not null, step S306 is executed.

Step S306, the first message of mobile phone messages to be processed in the message batch processing queue is taken as a presently processed message to be copied, i.e., the message of SIM card 1 is copied to SIM card 2, one message record can be increased in the data base, and the identifier of the SIM card of this message record is modified, in which the SIM card 1 in modified as SIM card 2.

Step S307, it is judged whether the copying is successful, and if successful, step S308 is executed, or else, step S309 is executed.

Step S308, the selected short message in the SIM card 1 is deleted, and the corresponding record in the data base is deleted synchronously, and then step S309 is executed.

Step S309, the presently processed message is deleted after completing to process the presently processed message, and the next mobile phone message in the queue is taken as the presently processed message, and step S305 is executed.

Step S310, the field of the mobile phone message in the message batch processing queue is circularly modified, for example, copying the selected short message in the inbox to the local sent box only needs to modify the mailbox type of the selected short message as the sent mailbox.

Step S 311, the processing of the message batch processing queue process ends.

The user may also easily perform operations of the sequencing in batch, selecting, deleting in batch, copying in batch for the mobile phone messages in the data base, which will not be described one by one.

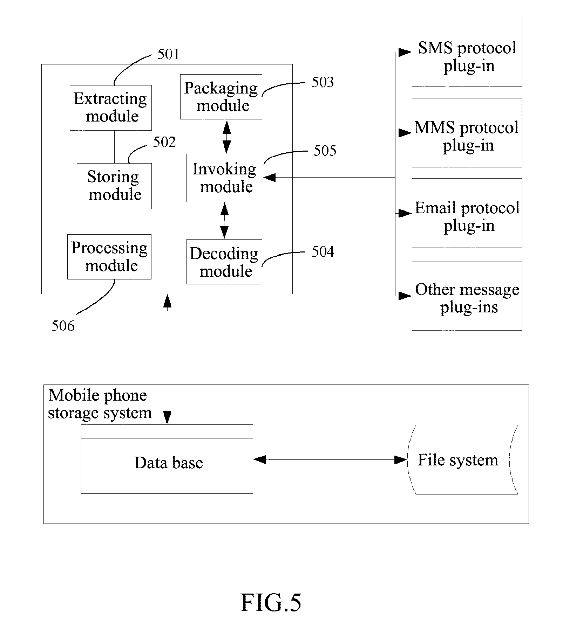

FIG. 5 is a schematic diagram of the mobile phone according to the embodiment of the present invention, and the mobile phone provided by the embodiment of the present invention will be described in detail as follows.

As shown in FIG. 5, the mobile phone of the embodiment comprises an extracting module 501 and a storing module 502. The extracting module 501 is configured to extract the value of public fields of various types of mobile phone messages, wherein the mobile phone message may be a mobile phone message in a SIM card, or a newly received mobile phone message such as a short message, a multimedia message, a push message and an Email, etc., or a mobile phone message such as a short message and a multimedia message, etc. newly established and stored as a draft by the user; the storing module 502 is configured to store the extracted values of public fields of the mobile phone messages in the same data base. The data base is established with public fields of at least two types of mobile phone message in advance, for example a data base is established by public fields, including a message ID, a recipient, a sender, a messaging time, a mailbox ID, a message type ID and so on, of the short message and the multimedia message, and the data base is stored in the mobile phone storage system, which enables to uniformly manage various types of mobile phone messages based on this data base.

Additionally, the mobile phone in the embodiment may also comprise a packaging module 503; since the complex mobile phone message such as a multimedia message and Email etc. includes other contents, such as pictures, audios, attachments and so on, except public fields, these contents cannot be stored directly in the data base, and the packaging module 503 can be applied to package the contents except the public fields of the complex mobile phone message as a file system, and the packaged message file is stored in the file system of the mobile phone storage system by the storing module 502, and the packaged message file is made to be one-to-one correspondence with the corresponding mobile phone message record in the data base, for example the packaged message file is named based on the message ID, and thus the corresponding message file may be obtained by the message ID conveniently, and further the entire complex contents of the mobile phone message are obtained.

Additionally, the mobile phone in the embodiment can further include a decoding module 504, which is configured to decode the above-mentioned packaged message file. After the corresponding message file is obtained by the message ID, the contents in the packaged message file may thus be obtained by the decoding of the decoding module 504.

The mobile phone of the embodiment may further comprise an invoking module 505, which is configured to invoke the message protocol in various types of mobile phone message protocol plug-ins (such as short messaging service (SMS) protocol plug-ins, MMS protocol plug-ins, Email protocol plug-ins and other message protocol plug-ins) to process various types of mobile phone messages. For example, the invoking module 505, when receiving a multimedia message, invokes the MMS protocol in the MMS protocol plug-in according to the message type of the multimedia message, and then the packaging module 503 packages the contents of non-public fields of the multimedia message according to the invoked MMS protocol to store in the file system; the invoking module 505, when reading an Email, invokes the Email protocol in the Email protocol plug-in according to the message type of the Email, and the decoding module 504 decodes the message file, that is obtained according to the message ID of the Email in the data base, based on the invoked Email protocol, and thus the decoded message file may thus be read.

The mobile phone in the embodiment may further comprise a processing module 506, which is configured to uniformly process various types of mobile phone messages, for example process the mobile phone messages in batch, including sequencing in batch, moving in batch, selecting in batch, deleting in batch or copying in batch and so on. The detailed processing procedure is as described above, which is no longer repeated herein.

The mobile phone provided according to the present invention is greatly convenient for a user uniformly managing and using various types of mobile phone messages.

The above embodiments are only examples for describing the method for processing phone messages and the mobile phone according to the present invention, which should not be considered as a limitation to the present invention. Various possible equivalent changes and substitutions may be made according to the description of the technical scheme of the present invention and preferred embodiments thereof, and all of these changes and substitutions should fall into the protection scope of the claims of the present invention.

### Industrial Applicability

The method for processing the mobile phone message and the corresponding mobile phone provided by the present invention integrate all of the messaging service modules in the application layer of the mobile phone, and uniformly store the values of the public fields of various types of mobile phone messages to the same data base, which is greatly convenient for uniformly managing various types of different messages by users.

## Claims

1. A method for processing a mobile phone message, comprising:
extracting values of public fields of mobile phone messages; and
storing the values of the public fields of the mobile phone messages to a same data base, wherein the data base is established with the public fields of at least two types of mobile phone messages in advance.

2. The method according to claim 1, further comprising:
for a mobile phone message including a non-public field, invoking a mobile phone message protocol to package a content of the non-public field of the corresponding mobile phone message as a message file, wherein the message file is one-to-one correspondence with a record of the mobile phone message stored in the data base.

3. The method according to claim 2, further comprising:
when processing the mobile phone message including the non-public field, invoking the mobile phone message protocol to decode the corresponding message file.

4. The method according to any one of claims 1 to 3, wherein the public fields of the mobile phone message includes: a message identifier (ID), a recipient, a sender, a messaging time, a subject, a mailbox ID and a message type ID.

5. The method according to any one of claims 1 to 3, further comprising:
processing the mobile phone messages in batch, wherein processing in batch is sequencing in batch, moving in batch, selecting in batch, deleting in batch or copying in batch.

6. The method according to claim 5, further comprising:
when processing in batch results in increasing or deleting of the mobile phone message or a change of the public field, modifying the corresponding record in the data base correspondingly.

7. A mobile phone, comprising:
an extracting module, which is configured to: extract values of public fields of mobile phone messages; and
a storing module, which is configured to: store the extracted values of the public fields of the mobile phone messages to a same data base; wherein the data base is established with the public fields of at least two types of mobile phone messages in advance.

8. The mobile phone according to claim 5, further comprising:
an invoking module, which is configured to: invoke various types of mobile phone message protocols; and
a packaging module, which is configured to: package a content of a non-public field of the corresponding mobile phone message as a message file according to the invoked mobile phone message protocol, and make the message file one-to-one correspondence with a record of the mobile phone stored in the data base.

9. The mobile phone according to claim 6, further comprising:
a decoding module, which is configured to: decode the corresponding message file according to the invoked mobile phone message protocol.

10. The mobile phone according to any one of claims 6 to 8, further comprising:
a processing module, which is configured to: process mobile phone messages in batch, and correspondingly modify the corresponding record in the data base when processing in batch result in increasing or deleting of the mobile phone message or a change of the public field.
